# EUROPEAN PATENT APPLICATION

(11) **EP 3 709 624 A1**
(43) Date of publication of application: **16.09.2020**
(21) Application number: 18875611.8
(22) Date of filing: 09.02.2018
(51) Int. Cl.: H04N 5/225, G05B 23/02

(54) **POWER SWAP MONITORING SYSTEM**

(30) Priority: 09.11.2017 CN 201711096118
(71) Applicant: NIO Nextev Limited, Central, Hong Kong (HK)
(72) Inventor: DING, Xikun, Central Hong Kong (HK); MA, Yongyue, Central Hong Kong (HK); BENGTSSON, Jan, Central Hong Kong (HK); LI, Nan, Central Hong Kong (HK); TIAN, Xiaotao, Central Hong Kong (HK)
(74) Representative: Vossius & Partner Patentanwälte Rechtsanwälte mbB
(86) International application number: PCT/CN2018/076012
(87) International publication number: WO 2019/091011

(57) **Abstract**

The invention provides a battery swap monitoring system, which comprises: a local end and a remote end, wherein the local end comprises: video capture devices disposed at different characteristic positions and configured to perform full-time and/or time-segmented monitoring on a monitored space so as to obtain multiple sets of monitored videos, the multiple sets of monitored videos being used to present a battery swap process for a vehicle in the monitored space by sections and/or by periods; and the local end and/or the remote end comprise/comprises: a video display device configured to receive the captured multiple sets of monitored videos and display the multiple sets of monitored videos by sections and/or by periods; and a data storage device configured to store the captured multiple sets of monitored videos. According to the battery swap monitoring system of the invention, real-time collection and monitoring of information and data in a monitored battery swap space are realized. The system can not only manually monitor abnormalities and issue an abnormality processing strategy in time, but also can process the abnormalities by alarming using an automatic control program; moreover, it is also possible to retrieve monitored data after the occurrence of an abnormality to conduct a retrospective analysis to find out and make up for deficiencies, thereby improving the security of an entire battery swap process in a battery swap station.

## Description

### Technical Field

The invention relates to the field of vehicle battery mounting and dismounting, and more particularly, to a battery swap monitoring system for use in a replacement process for a vehicle battery of an electric vehicle.

### Background Art

With the supply pressure and exhaust pollution caused by the consumption of traditional fossil energy, the development of traditional fuel vehicles has come to a lag period. In this regard, with the good prospects of green energy resources, energy-saving and environmentally friendly electric vehicles have been booming in recent years. At present, in the development of electric vehicles, due to the limitation of the current battery technology, the problems of insufficient battery capacity and long charging time are inevitable at present. In order to solve such technical problems, in one aspect, the research and development investment in the battery technology itself has increased; and in a further aspect, the development of peripheral technologies for batteries has also increased. For example, battery replacement is a fast, convenient, and safe solution.

Due to the relatively bulky size of vehicle batteries, it is difficult to implement the replacement at home, and therefore the construction of dedicated battery swap stations to complete battery swap operations is more feasible. Through automated or semi-automated operations, the efficiency of battery swap can further be improved, thereby reducing a battery swap waiting time, and improving user experience. In this process, how to set up a corresponding monitoring system to ensure secure and efficient battery swap operations has become a technical problem to be solved urgently.

Current monitoring systems are multifarious, but in most cases a camera is mounted on a terminal, and a video wall and a storage device are mounted on a server for monitoring. Personnel on duty determine current states of monitoring points in real time. To some extent, this solves the problem of battery swap monitoring, but there is still room for improvement as follows. For example, such monitoring systems must be manually monitored, and there is a lag in handling abnormality. For another example, such monitoring systems have poor interactivity, and can only monitor issues occurring at the site, and can hardly provide maintenance and technical support. For still another example, terminal permission setting and access control systems in such monitoring systems are inadequate, and have poor protection for equipment.

### Summary of the Invention

The object of the invention is to provide a battery swap monitoring system that can monitor a battery swap process and facilitate subsequent retrospection of the battery swap process.

In order to achieve the object of the invention, according to one aspect of the invention, a battery swap monitoring system is provided, which comprises: a local end and a remote end, wherein the local end comprises: video capture devices disposed at different characteristic positions and configured to perform full-time and/or time-segmented monitoring on a monitored space so as to obtain multiple sets of monitored videos, the multiple sets of monitored videos being used to present a battery swap process for a vehicle in the monitored space by sections and/or by periods; and the local end and/or the remote end comprise/comprises: a video display device configured to receive the captured multiple sets of monitored videos and display the multiple sets of monitored videos by sections and/or by periods; and a data storage device configured to store the captured multiple sets of monitored videos.

Optionally, the characteristic positions comprise one or more of a first characteristic position, a second characteristic position, a third characteristic position, and a fourth characteristic position, wherein a video capture device at the first characteristic position is configured to display a situation where the vehicle is driven to a first preset battery swap position and/or driven away from the first preset battery swap position; and/or a video capture device at the second characteristic position is configured to display a situation where the vehicle is lifted up to a first preset battery swap height and/or lowered away from the first preset battery swap height; and/or a video capture device at the third characteristic position is configured to display a situation where a battery swap transporter is driven to a second preset battery swap position and/or driven away from the second preset battery swap position; and/or a video capture device at the fourth characteristic position is configured to display a situation where the battery swap transporter lifts a battery up to the first preset battery swap height and/or carries the battery away from the first preset battery swap height.

Optionally, the local end and/or the remote end further comprise/comprises: a video processing module configured to process, by periods, the multiple sets of monitored videos captured at the different characteristic positions, and display, on the video display device, a monitored video of the battery swap process that is obtained through processing, wherein the monitored video of the battery swap process is used to display the complete battery swap process for the vehicle in the monitored space.

Optionally, the local end and/or the remote end further comprise/comprises: a battery swap parameter collection device configured to collect a battery swap parameter in the battery swap process for the vehicle; a battery swap parameter processing module configured to process the collected battery swap parameter and determine, based on the battery swap parameter, whether there is an abnormality in the battery swap process; and an alarm device configured to send an alarm signal to the local end and/or the remote end when the battery swap parameter processing module determines that there is an abnormality in the battery swap process.

Optionally, the local end further comprises: a permission setting module configured to set user permission levels and user permission content corresponding to entered information for different users; and an access control device configured to collect entered information for a user and acquire a user permission level and user permission content for the user based on the entered information.

Optionally, the system further comprises: an interaction device configured to implement an interaction function between the local end and the remote end, wherein the interaction device comprises: a user interaction device configured to implement an interaction between a local end user and a remote end user; and/or a data exchange module configured to implement exchange between local end data and remote end data.

Optionally, the video capture device comprises one or more of a web camera, an analog camera, and a web hard disk recorder.

Optionally, the video display device comprises one or more of a video wall, a mobile phone client, and a computer client.

Optionally, the data storage device comprises a local storage medium and/or a network storage medium.

Optionally, the local storage medium comprises a web hard disk recorder; and/or the network storage medium comprises a storage server and/or a storage array.

According to the battery swap monitoring system of the invention, real-time collection and monitoring of information and data in a monitored battery swap space are realized. The system can not only manually monitor abnormalities and issue an abnormality processing strategy in time, but also can process the abnormalities by the system conducting a self-service analysis and making a determination and issuing an alarm; moreover, it is also possible to retrieve monitored data after the occurrence of an abnormality to conduct a retrospective analysis to find out and make up for deficiencies, thereby improving the security of an entire battery swap process in a battery swap station.

### Brief Description of the Drawings

FIG. 1 is a schematic diagram of an embodiment of a battery swap monitoring system of the invention.
FIG. 2 is a schematic diagram of another embodiment of a battery swap monitoring system of the invention.

### Detailed Description of Embodiments

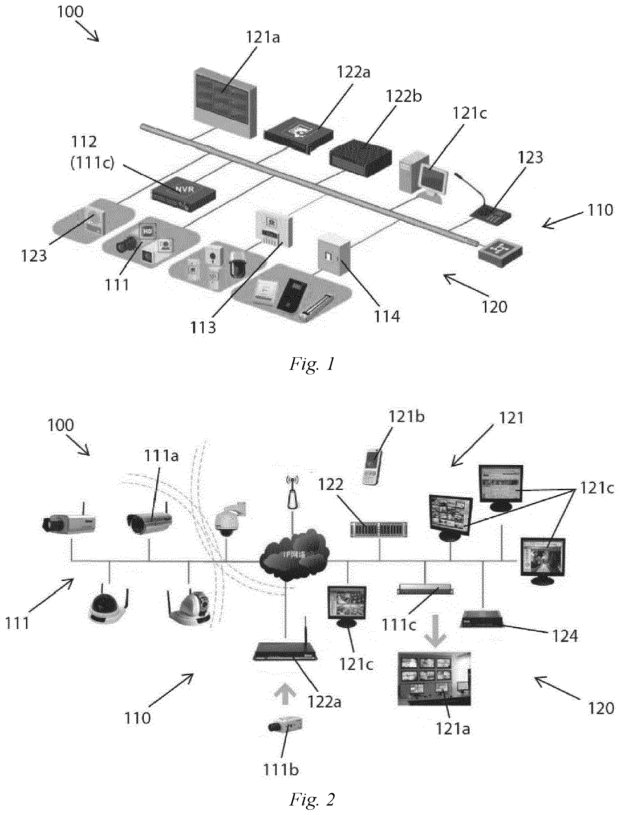

Refer to FIGs. 1 and 2, which show two embodiments of the invention, and follow the same concept, with only a few differences between hardware for implementing specific functions. The concepts of the invention will be described below in combination with the two embodiments. A battery swap monitoring system 100 comprises: a local end 110 and a remote end 120. The local end 110 comprises one or more devices and pieces of equipment of a station control system in a battery swap station to collect data, and in some cases, may further perform one or more of storage, analysis and processing, displaying, alarming, and information exchange. The remote end 120 comprises one or more server-side devices for performing storage, displaying, and the like on data from the local end, and in some cases, may further perform processing, analysis, remote technical support, problem retrospection, information exchange, and the like. According to the above functional concepts of the local end and the remote end, there may be overlapping among some functions. That is, after comprehensively considering various aspects such as costs and convenience, it is possible to choose to provide a specific functional module or device at one of the local end and the remote end, or to provide corresponding functional modules or devices at both ends. For example, in an embodiment, data collected at the local end may be displayed at at least one of the local end or the remote end. For another example, the data collected at the local end may be stored at at least one of the local end or the remote end. For still another example, the data collected at the local end may be analyzed and processed at at least one of the local end or the remote end.

In a battery swap monitoring system according to one specific example of the invention, the local end 110 comprises: video capture devices 111 disposed at different characteristic positions and configured to perform full-time and/or time-segmented monitoring on a monitored space so as to obtain multiple sets of monitored videos, the multiple sets of monitored videos being used to present a battery swap process for a vehicle in the monitored space by sections and/or by periods. The remote end 120 comprises: a video display device 121 configured to receive the captured multiple sets of monitored videos and display the multiple sets of monitored videos by sections and/or by periods. The local end 110 and/or the remote end 120 comprise/comprises: a data storage device configured to store the captured multiple sets of monitored videos.

The described full-time monitoring means that a corresponding video capture device needs to maintain a working state all the time, and the time-segmented monitoring means that the corresponding video capture device maintains a working state only when a battery swap action appears within a viewing angle of a characteristic position of the video capture device.

Correspondingly, the displaying the monitored videos by sections means dividing the video display device into several sections and placing all the video data collected by all the video capture devices at different sections in the video display device, so as to monitor all the video data. The displaying the monitored videos by periods needs to additionally comprise a video editing module, for editing and splicing, by periods, the multiple sets of monitored videos collected at the different characteristic positions, and displaying an edited and spliced battery swap process monitored video on the video display device. The battery swap process monitored video is used to display the complete battery swap process for the vehicle in the monitored space. It should be noted that the above-mentioned editing and splicing the time-segmented displayed videos by using the video editing module is just a simple application of a video processing method. In fact, a video processing module should be set up in the system to perform various forms of processing on videos, so as to meet requirements for different output results. These video processing methods can use existing mature technologies, and details will not be described herein.

The battery swap monitoring system according to the foregoing embodiment realizes real-time collection, displaying, processing, and monitoring of information and data in the monitored battery swap space, and is applicable to multiple monitoring and early warning methods as follows. For example, the system can manually monitor abnormalities and issue an abnormality processing strategy in time. For another example, the system can process the abnormalities by the system conducting a self-service analysis and making a determination and issuing an alarm. As an example, the system can compare, frame by frame, a monitored video acquired in real time with images of a standard video preset by the system, and send an alarm when an abnormality occurs during the comparison. Certainly, the system can continuously collect monitored videos for self learning so as to improve the standard video, thereby further improving alarming accuracy. For still another example, it is also possible to retrieve monitored data after an occurrence of an abnormality to conduct a retrospective analysis to find out and make up for deficiencies, thereby improving the security of an entire battery swap process in a battery swap station.

More specifically, the characteristic positions mentioned in the foregoing embodiment comprise one or more of a first characteristic position, a second characteristic position, a third characteristic position, and a fourth characteristic position, wherein a video capture device 111 at the first characteristic position is configured to display a situation where the vehicle is driven to a first preset battery swap position and/or driven away from the first preset battery swap position; a video capture device 111 at the second characteristic position is configured to display a situation where the vehicle is lifted up to a first preset battery swap height and/or lowered away from the first preset battery swap height; a video capture device 111 at the third characteristic position is configured to display a situation where a battery swap transporter is driven to a second preset battery swap position and/or driven away from the second preset battery swap position; and a video capture device 111 at the fourth characteristic position is configured to display a situation where the battery swap transporter lifts a battery up to the first preset battery swap height and/or carries the battery away from the first preset battery swap height. Through capturing, editing, and splicing of videos in the foregoing processes, the complete battery swap process in the battery swap station can be displayed on the video display device 121. As an example, the complete battery swap process shown in the videos comprises: the vehicle is driven to the first preset battery swap position; the vehicle is lifted up to the first preset battery swap height; the battery swap transporter is driven to the second preset battery swap position; the battery swap transporter lifts up to the first preset battery swap height; and the battery swap transporter carries a battery away from the first preset battery swap height. Up to now, a dismounting process of the battery to be dismounted of the vehicle is completed. Then, the battery swap transporter is driven away from the second preset battery swap position; and the battery swap transporter is driven to the second preset battery swap position. Up to now, an unloading process of the battery to be dismounted of the vehicle and a loading process of a battery to be mounted are completed. Afterwards, the battery swap transporter lifts the battery up to the first preset battery swap height; the battery swap transporter lowers away from the first preset battery swap height; the battery swap transporter is driven away from the second preset battery swap position; the vehicle is lowered away from the first preset battery swap height; and the vehicle is driven away from the first preset battery swap position. Up to now, the battery swap process for the vehicle is completed. The foregoing processes may all be displayed on the video display device simultaneously, or may be displayed one by one in a video after editing and splicing, so as to monitor the entire battery swap process. Certainly, other embodiments may exist in consideration of other improvements or variations in a battery swap process, and these embodiments will use only one or a few specific ones of the foregoing characteristic positions, which should also be comprised in the concept of this solution.

In addition, in order to improve automatic fault detection performance of the battery swap system, the following may be additionally provided: a battery swap parameter collection device configured to collect a battery swap parameter in the battery swap process for the vehicle; a battery swap parameter processing module configured to process the collected battery swap parameter and determine, based on the battery swap parameter, whether there is an abnormality in the battery swap process; and an alarm device 113 configured to send an alarm signal to the local end 110 and/or the remote end 120 when the battery swap parameter processing module determines that there is an abnormality in the battery swap process. Through real-time monitoring and determination of a battery swap action and timely interaction with the server, an abnormality processing strategy is acquired and executed in time.

In addition, the local end 110 further comprises: a permission setting module configured to set user permission levels and user permission content corresponding to entered information for different users; and an access control device 114 configured to collect entered information for a user and acquire a user permission level and user permission content for the user based on the entered information. This ensures the security of equipment as well as the security of operations during the battery swap.

Optionally, the system further comprises: an interaction device configured to implement an interaction function between the local end 110 and the remote end 120, wherein the interaction device comprises: a user interaction device 123, for example, an intercom equipment, configured to implement an interaction between a local end 110 user and a remote end 120 user, so as to provide technical support in the background in time; and a data exchange module configured to implement exchange between local end 110 data and remote end 120 data, so as to determine a site abnormality state and process the abnormality in time. Certainly, other embodiments may exist in consideration of actual requirements in a battery swap process, and these embodiments need to use only one or a few specific ones of the foregoing interaction methods and interaction equipment, which should also be comprised in the concept of this solution.

Several specific implementation forms of hardware components described in the foregoing embodiment will be further provided as follows. For example, the video capture device 111 comprises one or more of a web camera 111a, an analog camera 111b, and a web hard disk recorder 111c.

As another example, the video display device 121 comprises one or more of a video wall 121a, a mobile phone client 121b, and a computer client 121c. Furthermore, the mobile phone client 121b and the computer client 121c are also used for storing and recording various types of collected data while displaying videos. The video wall may be used to monitor a single battery swap station from multiple angles, or may be used to monitor multiple battery swap stations from a set angle.

For another example, the data storage device comprises a local storage medium 112 and/or a network storage medium 122. Specifically, the local storage medium 112 comprises a web hard disk recorder 111c that can be used for both data collection and local data storage. The network storage medium 122 comprises a storage server 122a and/or a storage array 122b, for recording real-time states in a current battery swap station. In addition, the server can also be used for data exchange in a battery swap process, such as order delivery and vehicle information certification.

Based on the foregoing embodiments, it can be learned that the communication architecture of the battery swap monitoring system can be applied to multiple local ends, that is, multiple battery swap stations are monitored in real time; and corresponding collection, determination, and processing for entire processes are performed at the remote end.

The above examples mainly illustrate the battery swap monitoring system of the invention. Although only some embodiments of the invention are described, it will be appreciated by those skilled in the art that the invention may be embodied in many other forms without departing from the essence and scope thereof. Therefore, the presented examples and embodiments are considered to be illustrative rather than restrictive, and the invention may cover various modifications and alterations without departing from the spirit and scope of the invention that are defined by the appended claims.

## Claims

1. A battery swap monitoring system, **characterized by** comprising:
a local end and a remote end, wherein the local end comprises:
video capture devices disposed at different characteristic positions and configured to perform full-time and/or time-segmented monitoring on a monitored space so as to obtain multiple sets of monitored videos, the multiple sets of monitored videos being used to present a battery swap process for a vehicle in the monitored space by sections and/or by periods;
and the local end and/or the remote end comprise/comprises:
a video display device configured to receive the captured multiple sets of monitored videos and display the multiple sets of monitored videos by sections and/or by periods; and
a data storage device configured to store the captured multiple sets of monitored videos.

2. The battery swap monitoring system according to claim 1, **characterized in that** the characteristic positions comprise one or more of a first characteristic position, a second characteristic position, a third characteristic position, and a fourth characteristic position, wherein
a video capture device at the first characteristic position is configured to display a situation where the vehicle is driven to a first preset battery swap position and/or driven away from the first preset battery swap position; and/or
a video capture device at the second characteristic position is configured to display a situation where the vehicle is lifted up to a first preset battery swap height and/or lowered away from the first preset battery swap height; and/or
a video capture device at the third characteristic position is configured to display a situation where a battery swap transporter is driven to a second preset battery swap position and/or driven away from the second preset battery swap position; and/or
a video capture device at the fourth characteristic position is configured to display a situation where the battery swap transporter lifts a battery up to the first preset battery swap height and/or carries the battery away from the first preset battery swap height.

3. The battery swap monitoring system according to claim 1, **characterized in that** the local end and/or the remote end further comprise/comprises: a video processing module configured to process, by periods, the multiple sets of monitored videos captured at the different characteristic positions, and display, on the video display device, a monitored video of the battery swap process that is obtained through processing, wherein the monitored video of the battery swap process is used to display the complete battery swap process for the vehicle in the monitored space.

4. The battery swap monitoring system according to claim 1, **characterized in that** the local end and/or the remote end further comprise/comprises:
a battery swap parameter collection device configured to collect a battery swap parameter in the battery swap process for the vehicle;
a battery swap parameter processing module configured to process the collected battery swap parameter and determine, based on the battery swap parameter, whether there is an abnormality in the battery swap process; and
an alarm device configured to send an alarm signal to the local end and/or the remote end when the battery swap parameter processing module determines that there is an abnormality in the battery swap process.

5. The battery swap monitoring system according to claim 1, **characterized in that** the local end further comprises:
a permission setting module configured to set user permission levels and user permission content corresponding to entered information for different users; and
an access control device configured to collect entered information for a user and acquire a user permission level and user permission content for the user based on the entered information.

6. The battery swap monitoring system according to claim 1, **characterized by** further comprising: an interaction device configured to implement an interaction function between the local end and the remote end, wherein the interaction device comprises: a user interaction device configured to implement an interaction between a local end user and a remote end user; and/or a data exchange module configured to implement exchange between local end data and remote end data.

7. The battery swap monitoring system according to any one of claims 1 to 6, **characterized in that** the video capture device comprises one or more of a web camera, an analog camera, and a web hard disk recorder.

8. The battery swap monitoring system according to any one of claims 1 to 6, **characterized in that** the video display device comprises one or more of a video wall, a mobile phone client, and a computer client.

9. The battery swap monitoring system according to any one of claims 1 to 6, **characterized in that** the data storage device comprises a local storage medium and/or a network storage medium.

10. The battery swap monitoring system according to claim 9, **characterized in that** the local storage medium comprises a web hard disk recorder; and/or the network storage medium comprises a storage server and/or a storage array.
